# FASCICULE DE BREVET EUROPEEN

(11) **EP 3 079 973 B1**
(45) Date de publication et mention de la délivrance du brevet: **18.04.2018**
(21) Numéro de dépôt: 14798914.9
(22) Date de dépôt: 09.10.2014
(51) Int. Cl.: B62D 25/14, B60R 13/02

(54) **SYSTÈME D'ASSEMBLAGE POUR PLANCHE DE BORD D'UN VÉHICULE AUTOMOBILE**
SYSTEM ZUM ZUSAMMENBAUEN EINES ARMATURENBRETTS EINES KRAFTFAHRZEUGS
SYSTEM FOR ASSEMBLING A DASHBOARD OF A MOTOR VEHICLE

(30) Priorité: 13.12.2013 FR 1362607
(43) Date de publication de la demande: 19.10.2016
(73) Titulaire: Renault s.a.s, 92100 Boulogne-Billancourt (FR)
(72) Inventeur: CORRE, Jean-Marie, F-78770 Thoiry (FR); GILLON, Julien, F-78650 Beynes (FR)
(86) Numéro de dépôt international: PCT/FR2014/052557
(87) Numéro de publication internationale: WO 2015/086930

(56) Documents cités:
- EP-A2- 1 203 711
- DE-A1- 10 152 242
- DE-A1- 19 524 111
- FR-A1- 2 972 993
- US-A- 5 564 769
- US-A1- 2003 034 672
- US-A1- 2010 295 285
- US-B1- 6 450 533

## Description

La présente invention concerne un système d'assemblage pour une planche de bord d'un véhicule automobile.

Un tel système d'assemblage comporte classiquement une traverse de planche de bord apte à être fixée transversalement à une direction longitudinale d'un véhicule automobile.

Les traverses de planche de bord sont disposées dans les véhicules automobiles transversalement entre les montants latéraux avant de la caisse du véhicule, généralement nommés « piliers A ». Ces traverses de planche de bord sont destinées à rigidifier la caisse et à supporter des équipements, notamment une colonne de direction.

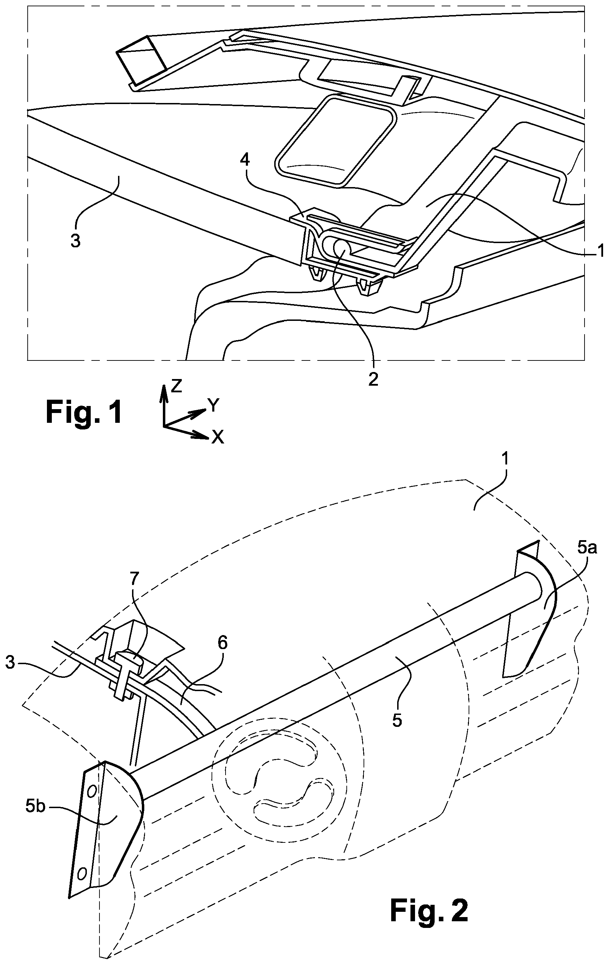

Pour renforcer la traverse de planche de bord dans une région intermédiaire de la planche de bord destinée à supporter la colonne de direction, il est connu de munir la traverse de planche de bord d'un tirant au niveau de cette région intermédiaire, le tirant servant d'organe de liaison entre la traverse de planche de bord et une traverse inférieure de baie s'étendant sensiblement parallèlement à la traverse de planche de bord sous l'extrémité avant pare-brise. Un tel assemblage est décrit par le document US5564769A1, et en particulier le document US2008/0048470A1 qui divulgue le préambule de la revendication 1 de la présente demande. Dans les systèmes d'assemblage connus, le tirant est fixé à la traverse de baie par l'intermédiaire d'une vis de fixation. La planche de bord repose quant à elle sur la traverse de planche de bord, tout en étant fixée au moins en deux endroits à la traverse inférieure de baie. Plus précisément, comme illustré sur la figure 1 qui représente une vue partielle en perspective d'une planche de bord montée à l'intérieur d'un véhicule, la planche de bord 1 comprend classiquement au moins deux tourillons 2 (un seul étant visible sur la figure) s'étendant sensiblement transversalement à une direction longitudinale X du véhicule automobile et parallèlement à la traverse 3 inférieure de baie. Chacun des tourillons 2 est reçu par une agrafe 4 positionnée et immobilisée sur la traverse 3 inférieure de baie. La coopération du tourillon et de l'agrafe permet de positionner en hauteur la planche de bord, par un serrage de la planche de bord dans l'agrafe, tout en permettant une liberté de mouvement de la planche de bord selon la direction longitudinale X. Ces dispositions permettent d'éviter des difficultés au moment du montage de la planche de bord et/ou des défauts d'aspect de la planche de bord. Ces dispositions permettent en outre, dans un certain nombre de cas, d'éviter les vibrations susceptibles d'entraîner une nuisance sonore pour les occupants du véhicule.

Dans ce contexte, les études de la demanderesse ont permis de mettre en évidence certaines configurations de véhicules dans lesquelles le système de fixation tourillon/agrafe ne permet pas de respecter le cahier des charges en termes de vibrations.

La présente invention a pour but de pallier l'inconvénient précédent en proposant une solution de fixation réduisant les vibrations.

A cet effet, l'invention a pour objet un système d'assemblage pour planche de bord d'un véhicule automobile, du type comportant une traverse de planche de bord apte à être fixée transversalement à une direction longitudinale d'un véhicule automobile et parallèlement à une traverse inférieure de baie, et au moins une vis de fixation d'un tirant de ladite traverse de planche de bord à ladite traverse inférieure de baie, caractérisé en ce que la planche de bord est fixée audit tirant et à la traverse inférieure de baie par l'intermédiaire de ladite vis de fixation.

Le tirant est de préférence fixé entre la planche de bord et la traverse inférieure de baie par l'intermédiaire de ladite vis de fixation.

La vis de fixation est apte à s'étendre, en position montée, selon une direction sensiblement verticale.

Le tirant est apte à s'étendre, en position montée, sensiblement selon la direction longitudinale du véhicule, dans une région faisant face au conducteur.

Les caractéristiques et avantages de la présente invention ressortiront de la description suivante, faite en référence aux figures annexées, dans lesquelles :
- la figure 1, déjà décrite, illustre une vue partielle en perspective d'une planche de bord montée à l'intérieur d'un véhicule, selon un système d'assemblage connu ;
- la figure 2 est un schéma montrant le principe de l'assemblage d'une planche de bord selon l'invention;
- la figure 3 est une vue partielle en perspective montrant en coupe verticale la zone de fixation de la planche de bord, du tirant de traverse et de la traverse inférieure de baie conformément à l'invention.

Dans la suite, les éléments communs à l'ensemble des figures portent les mêmes références.

Par ailleurs, on utilise le référentiel classique (X, Y, Z) dans lequel X représente la direction longitudinale du véhicule, dirigée de l'avant vers l'arrière, Y est la direction transversale du véhicule, dirigée de la gauche vers la droite, et Z représente la direction verticale dirigée du bas vers le haut.

Le principe d'assemblage d'une planche de tableau de bord selon l'invention consiste à utiliser la même vis de fixation qui servait jusqu'à maintenant à fixer la traverse de planche de bord, par l'intermédiaire de son tirant, à la traverse inférieure de baie, pour fixer également la planche de bord. Ainsi, comme illustré schématiquement sur la figure 2, un système d'assemblage d'une planche de bord 1 comporte classiquement :
- une traverse 5 de planche de bord apte à être fixée, au niveau de ses deux extrémités 5a, 5b, à des montants latéraux verticaux (non représentés) d'un véhicule automobile de manière à s'étendre transversalement, selon la direction Y ;
- un tirant 6 de traverse s'étendant sensiblement dans la direction longitudinale X du véhicule, dans une région faisant face au conducteur (à gauche dans l'exemple de la figure 2 pour une conduite à droite) ;
- une vis 7 de fixation s'étendant sensiblement selon la direction Z pour la fixation du tirant 6 de traverse à une traverse 3 inférieure de baie.

En revanche, au lieu d'utiliser la coopération d'un tourillon de la planche de bord avec une agrafe sur la traverse inférieure de baie comme décrit en référence à la figure 1, on utilise la même vis 7 de fixation de sorte que le tirant 6 se retrouve localement pris en étau entre la planche 1 de bord et la traverse 3 inférieure de baie.

Grâce à l'utilisation d'une même fixation positive, on bride tout mouvement de la planche de bord selon l'axe longitudinal X du véhicule, à tout le moins au niveau local de la fixation, ce qui permet de réduire les vibrations.

En outre, on économise une agrafe sur la traverse 3 inférieure de baie, ce qui rend le montage moins coûteux et moins encombrant.

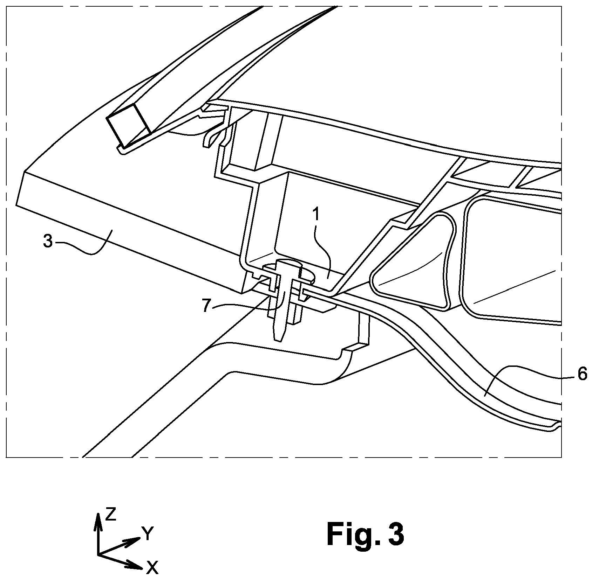

La figure 3 illustre en perspective un exemple de tirant 6 de traverse (non visible) maintenu en sandwich entre une planche 1 de bord et la traverse 3 inférieure de baie par la fixation positive 7.

## Revendications

1. Système d'assemblage pour planche de bord (1) d'un véhicule automobile, du type comportant une traverse de planche de bord (5) apte à être fixée transversalement à une direction longitudinale d'un véhicule automobile et parallèlement à une traverse inférieure de baie (3), et au moins une vis (7) de fixation d'un tirant (6) de ladite traverse de planche de bord (5) à ladite traverse inférieure de baie (3), **caractérisé en ce que** la planche de bord (1) est fixée audit tirant (6) et à la traverse inférieure de baie (3) par l'intermédiaire de ladite vis de fixation (7).

2. Système d'assemblage selon la revendication 1, **caractérisé en ce que** ledit tirant (6) est fixé entre la planche de bord (1) et la traverse inférieure de baie (3) par l'intermédiaire de ladite vis de fixation (7).

3. Système d'assemblage selon l'une quelconque des revendications précédentes, **caractérisé en ce que** ladite vis de fixation (7) est apte à s'étendre, en position montée, selon une direction sensiblement verticale.

4. Système d'assemblage selon l'une quelconque des revendications précédentes, **caractérisé en ce que** le tirant (6) est apte à s'étendre, en position montée, sensiblement selon la direction longitudinale du véhicule, dans une région faisant face au conducteur.

## Patentansprüche

1. Zusammenbausystem für ein Armaturenbrett (1) eines Kraftfahrzeugs, von der Art, die einen Armaturenbrett-Querträger (5), der quer zu einer Längsrichtung eines Kraftfahrzeugs und parallel zu einem unteren Fensterausschnitt-Querträger (3) befestigt werden kann, und mindestens eine Befestigungsschraube (7) eines Zugankers (6) des Armaturenbrett-Querträgers (5) am unteren Fensterausschnitt-Querträger (3) aufweist, **dadurch gekennzeichnet, dass** das Armaturenbrett (1) über die Befestigungsschraube (7) am Zuganker (6) und am unteren Fensterausschnitt-Querträger (3) befestigt wird.

2. Zusammenbausystem nach Anspruch 1, **dadurch gekennzeichnet, dass** der Zuganker (6) zwischen dem Armaturenbrett (1) und dem unteren Fensterausschnitt-Querträger (3) über die Befestigungsschraube (7) befestigt ist.

3. Zusammenbausystem nach einem der vorhergehenden Ansprüche, **dadurch gekennzeichnet, dass** die Befestigungsschraube (7) sich in der montierten Stellung gemäß einer im Wesentlichen senkrechten Stellung erstrecken kann.

4. Zusammenbausystem nach einem der vorhergehenden Ansprüche, **dadurch gekennzeichnet, dass** der Zuganker (6) sich in der montierten Stellung im Wesentlichen in Längsrichtung des Fahrzeugs in einem Bereich erstrecken kann, der dem Fahrer gegenüberliegt.

## Claims

1. Assembly system for a dashboard (1) of a motor vehicle, of the type comprising a dashboard crossmember (5) able to be fastened transversely to a longitudinal direction of a motor vehicle and parallel to a lower windscreen crossmember (3), and at least one screw (7) for fastening a tie bar (6) of the said dashboard crossmember (5) to the said lower windscreen crossmember (3), **characterized in that** the dashboard (1) is fastened to the said tie bar (6) and to the lower windscreen crossmember (3) by way of the said fastening screw (7).

2. Assembly system according to Claim 1, **characterized in that** the said tie bar (6) is fastened between the dashboard (1) and the lower windscreen crossmember (3) by way of the said fastening screw (7).

3. Assembly system according to either one of the preceding claims, **characterized in that** the said fastening screw (7) is able to extend, in the mounted position, in a substantially vertical direction.

4. Assembly system according to any one of the preceding claims, **characterized in that** the tie bar (6) is able to extend, in the mounted position, substantially in the longitudinal direction of the vehicle, in a region facing the driver.
